# EUROPÄISCHE PATENTSCHRIFT

(11) **EP 0 728 064 B1**
(45) Veröffentlichungstag und Bekanntmachung des Hinweises auf die Patenterteilung: **10.05.2000**
(21) Anmeldenummer: 95930358.7
(22) Anmeldetag: 18.09.1995
(51) Int. Cl.: B29C 31/04, B29D 23/20, B29C 43/34

(54) **VERFAHREN ZUR BEFÜLLUNG EINER MATRIZE ZUR ANFORMUNG EINES TUBENKOPFES AN EIN TUBENROHR**
METHOD OF FILLING A MATRIX IN ORDER TO FORM A TUBE HEAD INTEGRALLY ON A TUBE BODY
PROCEDE DE REMPLISSAGE D'UNE MATRICE POUR LE FORMAGE D'UNE TETE DE TUBE SUR UN CORPS TUBULAIRE

(30) Priorität: 19.09.1994 CH 284994
(43) Veröffentlichungstag der Anmeldung: 28.08.1996
(73) Patentinhaber: KMK LIZENCE LTD., Chaussée, Port Louis (MU)
(72) Erfinder: SCHEIFELE, Fredy, CH-8340 Hinwil (CH)
(74) Vertreter: Peege, Klaus
(86) Internationale Anmeldenummer: CH9500205
(87) Internationale Veröffentlichungsnummer: WO9609151

(56) Entgegenhaltungen:
- WO-A-91/15349
- DE-C- 3 804 464
- GB-A- 2 053 077
- US-A- 4 304 751

## Beschreibung

Die Erfindung betrifft ein Verfahren zur Befüllung einer Form zur Anformung eines aus Kunststoff bestehenden Tubenkopfes an ein Tubenrohr nach dem Oberbegriff des Patentanspruches 1.

Zur Anformung eines Tubenkopfes an ein Tubenrohr haben sich zwei Techniken herausgebildet. Eine erste Art der Anformung kennzeichnet sich dadurch, dass ein vorgefertigter Tubenkopf mit einem Tubenrohr verbunden wird, während bei der zweiten Art die Verbindung von Tubenrohr und Tubenkopf während der Formgebung, d.h. Bildung des Tubenkopfes, erfolgt. Die Erfindung liegt auf dem Gebiet letzterer Technik, d.h. der gleichzeitigen Formgebung eines Tubenkopfes, dessen Anformung an und Verbindung mit einem Tubenrohr, auch kurz Simultananformung genannt.

Bekannt ist ein Verfahren zur Simultananformung, bei dem aus einem vertikal abwärts gerichteten Materialstrom eines Materialgebers von durch wärmeplastifiziertem Kunststoff eine Materialportion als ringförmiger Rohling abgetrennt in einen Formhohlraum einer Matrize eingebracht und anschliessend durch Schliessen des Formhohlraumes vermittels eines Dornes mit darauf aufgenommenem Tubenrohr zu einem mit dem Tubenrohr verbundenen Tubenkopf verpresst wird. Das besondere an diesem Verfahren ist, dass der abgetrennte Rohling ohne Anwendung mechanischer Hilfsmittel in den Formhohlraum eingebracht wird. Damit wurde bezüglich der Rohlinge vor der Verpressung die Schmelzwärme nur geringfügig abgebaut, und die weitgehende Unterdrückung störender örtlicher Abkühleffekte, die zu lokalen Vorkristallisationen und damit fehlerhaften Tubenköpfen führten, erreicht. Die vorstehenden Vorteile des bekannten Verfahrens wurden im Zusammenhang mit plastifizierbaren Kunststoffen einfacher bis komplexer chemischer Zusammensetzung, letztere auch high tech plastic compounds oder kurz high tech compounds genannt, erreicht. Mit weiter fortschreitender Entwicklung, d.h. Komplexität der high tech compounds wird bezüglich deren Verarbeitung deutlich, dass die bekannte Einbringung in den Formhohlraum fertigungstechnische Grenzen ziehen wird. Eine liegt darin, dass auf die Beschickungsdauer des Formhohlraumes nur begrenzt Einfluss genommen werden kann (bei konstanter Formhohlraumhöhe und konstanter Absenkgeschwindigkeit bleibt zwangsläufig die Beschickungsdauer konstant), eine weitere Grenze tut sich durch die nicht genau reproduzierbare Gleichlage der Materialportionen im Formhohlraum auf. Zur einwandfreien Verarbeitung von high tech compounds sind beispielsweise bestimmte Temperaturgradienten (Temperaturabfälle der Materialportionen auf einer Streckeneinheit zwischen Materialgeber und Ablagefläche auf dem Formboden) einzuhalten, auf die bei vorgegebener Formhohlraumhöhe nur über die Absenkgeschwindigkeit Einfluss genommen werden kann. In den Temperaturgradienten einzubeziehen ist die Abkühlung der Materialportion nach erfolgter Formhohlraumbeschickung bis zur Verpressung, also die Verweilzeit der Materialportion im Formhohlraum bis zur Verpressung. Dieser Teil des Temperaturgradienten (Temperaturabfall auf einer Wegstrecke Null) ist nur beherrschbar, wenn die Materialportionen stets gleichlagig im Formhohlraum zur Ablage gelangen. Ungleiche Ablage, z.B. versetzt zur Normallage hat unterschiedliche Abkühlungen zur Folge, was einer Verarbeitung des Kunststoffes im Rahmen enger Temperaturgradienten nachteilig entgegensteht.

Während vorstehend benannter Stand der Technik aus der GB, A, 2 053 077 bekannt ist, offenbart DE 38 04 464 C1 ein weiteres Verfahren zur Herstellung von Presskörpern aus thermoplastischem Kunststoffmaterial, umfassend einen Extruder und eine Pressform mit einem in der Pressform axial verfahrbaren Zwischenträger, der eingefahren einen Teil der Oberfläche der Pressform bildet. Zur Befüllung der Pressform soll der Zwischenträger soweit in Richtung des Extruders aus der Pressform ausgefahren sein, dass der Extruder eine Materialportion auf der Stirnfläche des Zwischenträgers ablegt, wobei der beladene Zwischenträger beim Schliessen der Pressform abgesenkt wird. Auch dieses Verfahren lässt keine Verstellungen der Wegstrecke und der Einfahrgeschwindigkeit des Hilfsträgers zur Optimierung der Verarbeitung plastifizierbarer, chemisch komplex aufgebauter Kunststoffe zu.

Vorrichtungen zur Durchführung des Verfahrens, sogenannte Kopfmaschinen, sind hochwertige und langlebige Wirtschaftsgüter, mit denen Kunststoffe einfachster bis komplexester Zusammensetzung je nach Anforderung an die Eigenschaften, z.B. Diffusionsverhalten der Tubenköpfe verarbeitbar sein müssen. Ein Verfahren zu entwickeln, mit dem nur hochkomplexe Kunststoffe zur Verarbeitung gelangen können, würde im Gesamtspektrum verarbeitbarer Kunststoffe eine isolierte, begrenzte Lösung darstellen, die aber technisch und kommerziell keine Akzeptanz finden würde, da der Anwender auf ein Verfahren zur Verarbeitung von Kunststoffen aller Komplexitätsgrade angewiesen ist. Ausgehend von dem genannten Stand der Technik und unter Berücksichtigung des Erfordernisses, dass ein Verfahren zur Verarbeitung hochkomplexer Kunststoffe gleichermassen mit gutem Erfolg zur Verarbeitung einfach zusammengesetzter Kunststoffe geeignet sein muss, liegt der Erfindung die Aufgabe zugrunde, ein Verfahren zur Befüllung einer Form zur Herstellung von Tubenköpfen aus plastifizierbaren Kunststoffen, enthalten in einem weiten Komplexitätsspektrum, zu schaffen, und diese Aufgabe wird erfindungsgemäss mit den kennzeichnenden Merkmalen des Anspruches 1 gelöst.

Gemäss der Erfindung ist zwischen Materialgeber und geschlossenem Ende des Formhohlraumes, d.h. dem Formboden der Matrize ein bezüglich seiner Wegstrecke zwischen Formboden und Materialgeber variabel verstellbarer Hilfsträger vorgesehen, auf dem eine Materialportion aufgebracht, in den Formhohlraum eingefahren und darin in Presslage gehalten wird. Die Wegstrecke des Hilfsträgers zwischen Formboden und Materialgeber ist auf eine jede Zwischenstellung zwischen einer Nullage (Hilfsträger ist inaktiv am oder im Formboden verbleibend eingestellt) - untere Stellung - und einem Abstand zur Nullage, d.h. variabel einstellbar bei dem er eine Materialportion, wie immer auch in ihrer axialen Richtung bemessen, direkt vom Materialgeber abnimmt, - obere Stellung -. Zusätzlich zur Einstellbarkeit der Wegstrecke sieht das erfindungsgemässe Verfahren - im Falle, dass der Hilfsträger nicht in Nullage liegend eingestellt ist - vor, die Einfahrgeschwindigkeit der Materialportionen, damit der Hilfsträger, variabel auszugestalten. Ueber Verstellung der Wegstrecke und der Einfahrgeschwindigkeit des Hilfsträgers ist es erfindungsgemäss möglich geworden, zur Optimierung der Verarbeitung plastifizierbarer chemisch komplex aufgebauter Kunststoffe den ersten Teil eines dazu notwendigen Temperaturgradienten (Temperaturabfall auf der Wegstrecke entsprechend der Formhohlraumhöhe) in engen Grenzen einzustellen und in diesen Grenzen zu halten. Durch Ablage auf dem Hilfsträger ist weiter auch der zweite Teil der Temperaturgradienten (Temperaturabfall auf Wegstrecke Null) gesichert, indem der Hilfsträger eine weitgehende Gleichlagigkeit des Materialrohlings im Formhohlraum sicherstellt. Fertigungstechnisch gesehen können vorstehende Einstellungen und Funktionsweisen als eine Verfahrensart mit einstellbaren Verfahrensparametern für plastifizierbare Kunststoffe chemisch komplexen Aufbaues bezeichnet werden, während Kunststoffe einfachen Aufbaues nach einer Verfahrensart invariabler Verfahrensparameter zur Verarbeitung gelangen können, wobei sich diese Verfahrensstufe dadurch kennzeichnet, dass der Hilfsträger in Nullage inaktiviert ist.

Weitere vorteilhafte Ausgestaltungen des erfindungsgemässen Verfahrens ergeben sich aus den dem Anspruch 1 folgenden Ansprüche. Weitere Vorteile, Merkmale und Einzelheiten des erfindungsgemässen Verfahrens ergeben sich aus der folgenden Beschreibung eines bevorzugten Ausführungsbeispieles im Zusammenhang mit einer zu dessen Durchführung zweckmässigen Vorrichtung und es zeigen:
- Fig. 1:: eine schematisch dargestellte Vorrichtung zur Anformung eines Tubenkopfes an ein Tubenrohr in der Draufsicht;
- Fig. 2:: die Vorrichtung entlang der Schnittlinie II-II in Fig. 1 in der Seitenansicht;
- Fig. 3:: Befülleinrichtung und Form gemäss Fig. 2 als Einzelheit in vergrösserter Darstellung, mit der Form im Schnitt in Seitenansicht.

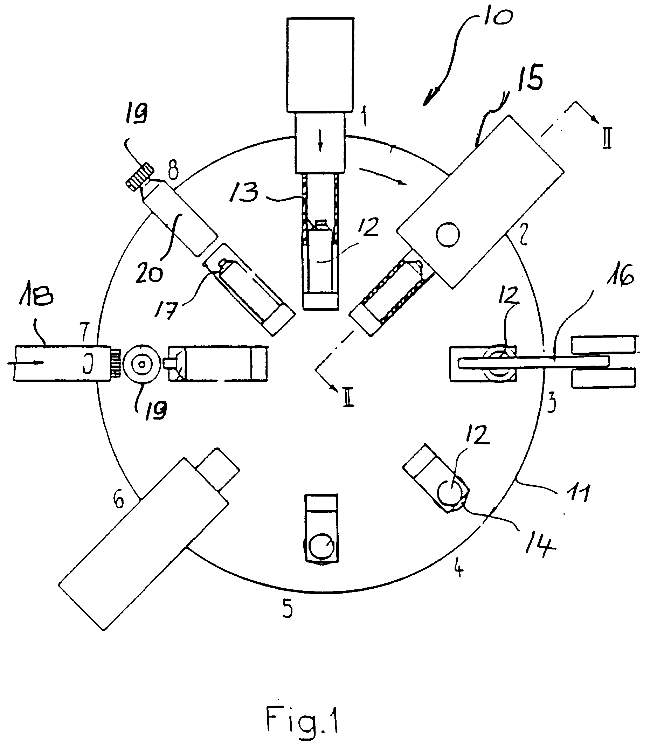

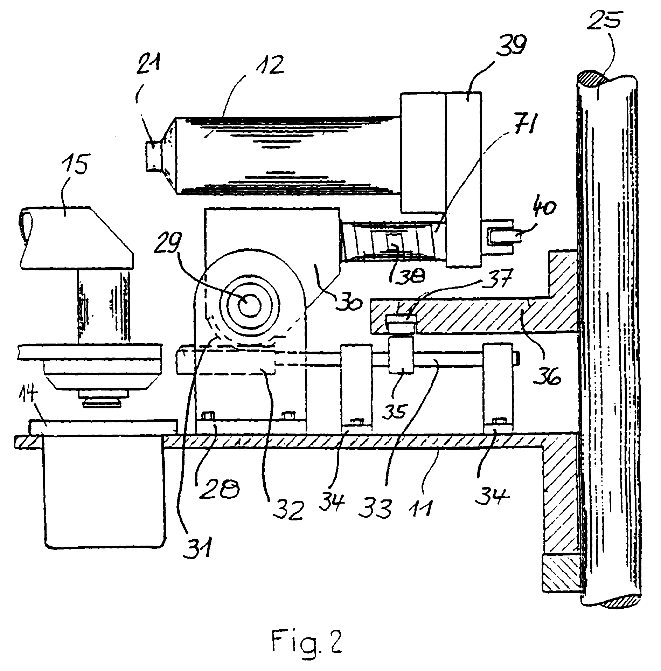

Fig. 1 zeigt eine Vorrichtung 10 zur Anformung eines Tubenkopfes 17 an ein Tubenrohr, folgend kurz Kopfmaschine 10 genannt, die sich beispielshalber zur Durchführung des erfindungsgemässen Verfahrens eignet, wobei die Anwendung des erfindungsgemässen Verfahrens auf eine Kopfmaschine 10 der folgend beschriebenen Art und Ausgestaltung nicht beschränkt ist. Die Kopfmaschine 10 umfasst einen Drehteller 11 mit Arbeitsstationen 1 bis 8. Auf jeder Arbeitsstation befindet sich in einem identischen Abstand vom Drehteller-Zentrum eine Form 19. In Arbeitsstation 1 wird ein horizontalliegender Dorn 12 mit einem Tubenrohr 13 beschickt. Nach der Beschickung dreht der Drehteller getaktet (um 45 Grad) in Arbeitsstation 2. In Arbeitsstation 2 wird die Form 14 mit plastifiziertem Kunststoff aus einem Extruder 15 beschickt. Während des Beschickungsvorganges in Arbeitsstation 2 liegt der Dorn 12 mit Tubenrohr 13 in horizontaler Lage, siehe Fig. 2. Nach der Beschickung dreht der Drehteller 11 mit Dorn 12 mit Tubenrohr 13 und Form 14 in Arbeitsstellung 3. Während der Drehbewegung schwenkt der Dorn 12 in die Vertikale und wird vermittels eines Kniehebels 16 in die Form 14 eingefahren. Bei Abschluss des Einfahrvorganges in Arbeitsstellung 3, d.h. in Pressstellung des Dornes 12, ist ein Tubenkopf 17 in der Form 14 ausgeformt, gleichzeitig wurde das Tubenrohr 13 mit dem Tubenkopf verbunden. Bei Weiterdrehung des Drehtellers 11 in Arbeitsstellung 4 gelangt der Kniehebel 16 zu Dorn 12 ausser Eingriff. In Arbeitsstellung 4 ist der Dorn 12 in der Form 14 durch nicht gezeigte Mittel in Pressstellung gehalten. Die Arbeitsstellung 4 wird getaktet zur Abkühlung des Tubenkopfes 17 in der Form 14 durchfahren. Gleiches gilt bei unveränderter Form 14 und Dorn-12 Stellung für die Arbeitsstation 5. Zwischen Arbeitsstation 5 und Arbeitsstation 6 wird der Dorn 12 mit darauf aufgenommenem Tubenrohr 13 und angeformtem Tubenkopf 17 zunächst vertikal aus der Form 14 ausgefahren und nach Ausfahren in die Horizontale geschwenkt. Nach Abschluss des nächsten Taktschrittes, also Arbeitsstellung 7 wird durch auf eine Aufschraubeinrichtung 18 auf den Tubenkopf 17 ein Drehverschluss 19 aufgebracht. Nach erfolgter Weiterdrehung wird in Station 8 eine Tube 20 vom Dorn 12 abgenommen und von der Kopfmaschine 10 abgeführt, so dass der Dorn 12 nach Weiterdrehung in Arbeitsstation 1 wieder mit einem Tubenrohr 13 beladen werden kann. Wie aus Fig. 1 ersichtlich, umfasst die Kopfmaschine 10 auf ihrem Drehteller 11 insgesamt acht Formen 14 (auch Matrizen 14 genannt) und acht Dorne 12 (auch Patrizen 12 genannt), von denen jeweils immer drei in Arbeitsstellung 3, 4 und 5 bezüglich des Tubenkopfes 17 formend und das Tubenrohr 13 mit letzterem gleichzeitig verbindend in Eingriff stehen.

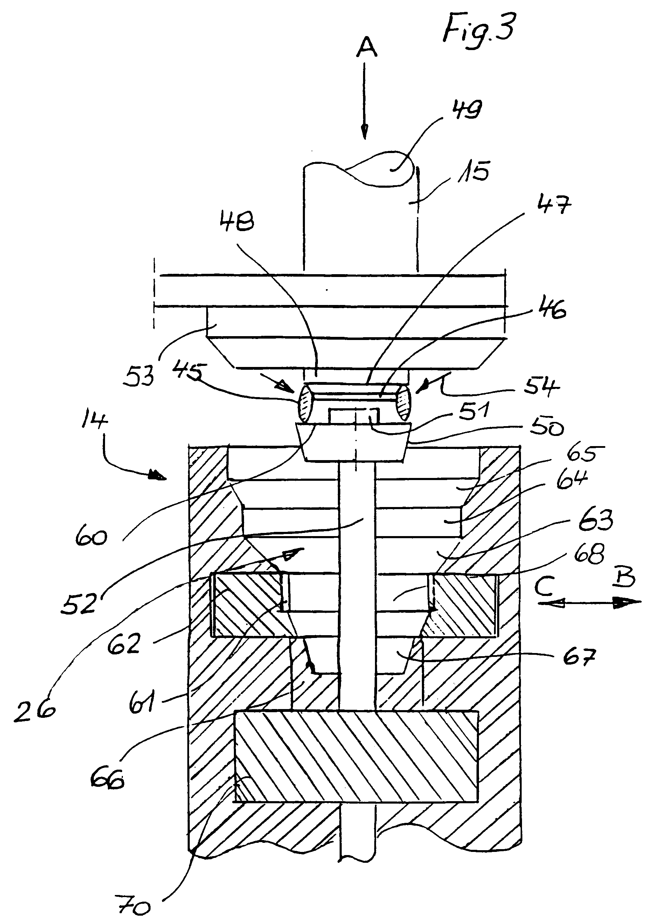

Fig. 2 zeigt die Arbeitsstation 2, die Erfindung umfassend, entlang der Schnittlinie II-II in der Seitenansicht. Der Drehteller 11 dreht um eine feststehende Welle 25 und wird über nicht gezeigte Antriebsmittel schrittweise angetrieben. Nahe des äusseren Umfanges des Drehtellers 11 sind Matrizen 14 in den Drehteller 11 fest eingelassen. Die Matrizen 14 enthalten einen Formhohlraum 26, dessen unteres Ende der Form eines Tubenkopfes 17 entspricht. Oberhalb der Form 14 befindet sich in Arbeitsstellung 2 ein Materialgeber 15, der plastifizierten Kunststoff in die Form 14 abgibt. Materialgeber 15 und Form 14 werden im Zusammenhang mit Fig. 3 detailliert beschrieben. Aus Fig. 2 ist ersichtlich, dass sich der Dorn 12 mit Tubenrohr 13 in Arbeitsstellung 2 in horizontaler Lage befindet. Der Dorn 12 ist auf dem Drehteller 11 zwischen zwei Lagerböcken 28 um eine Welle 29 in die Vertikale schwenkbar ausgebildet. Dazu ist ein Schwenkteil 30 vorgesehen, das an einem, dem Drehtisch zugewandten Ende eine Verzahnung 31 aufweist, die mit einer horizontal verschiebbaren Zahnstange 32 zusammenwirkt. Wird beispielsweise die Schubstange 33 an deren vorderen freien Ende die Zahnstange 32 angeordnet ist, in Richtung auf die feststehende Welle 25 verschoben, so wird das Schwenkteil 30 vermittels Verzahnung 31 und Zahnstange 32 um bis zu 90 Grad in vertikale Richtung verschwenkt. Die Schubstange 33 ist in zwei radial beabstandet angeordneten Führungsböcken 34 verschiebbar aufgenommen. Zwischen den Führungsböcken 34 ist ein mit der Schubstange 33 fest verbundener Mitnehmer 35 vorgesehen, der mit einer Steuerscheibe 36 in Eingriff steht, wobei die Steuerscheibe 36 gegenüber dem Drehteller 11 feststehend, d.h. nicht mitdrehend ausgebildet ist. Eine Steuernut 37 in der Steuerscheibe 36 ist so angelegt, dass sie den Mitnehmer 35 mit Schubstange 33 zwischen den Führungsböcken 34, gleichzeitig das Schwenkteil 30 verschwenkend, zum einen in Richtung auf die feststehende Welle 25 und zum anderen zum äusseren Umfang des Drehteller 11 hin bewegt.

Das Schwenkteil 30 ist mit einem vorzugsweise runden Führungsschaft 38 versehen, der in Fig. 2 vom Schwenkteil 30 in Richtung auf die feststehende Welle 25 horizontal verlaufend abragt. Wäre das Schwenkteil 30 um 90 Grad in die Senkrechte verschwenkt, würde der Führungsschaft 38 parallel zur feststehenden Welle 25 verlaufend vom Schwenkteil 30 aufragen. Auf dem Führungsschaft 38 axial verschiebbar ist ein Dornhalter 39 vorgesehen, der einen Dorn 12 in Fig. 2 mit aufgeschobenem Tubenrohr 13 in Richtung auf die Form 14 vom Dornhalter 39 abragend trägt. An seinem freien Ende weist der Führungsschaft 38 eine Rolle 40 auf, die in Arbeitsstation 3 mit dem Kniehebel 16 zusammenwirkend, d.h. nach Verschwenken des Dornes 12 in die Vertikale, letzteren den Führungsschaft 38 entlangfahrend, in die Matrize 14 einfahren lässt, Ungenauigkeiten einzelner Matrizen 14 werden dabei durch eine vorspannende Feder 71 ausgeglichen. In Einfahrlage (Arbeitsstation 4 und 5) wird die Patrize 12 in der Matrize 14 in Einfahrlage, d.h. Pressstellung, durch nicht dargestellte Mittel beispielsweise durch Verklinken des Dornhalters 39 auf dem Führungsschaft 38 gehalten, wobei die Verklinkung in Arbeitsstation 6 zum Herausfahren der Patrize 12 aus der Matrize 14 und Schwenken der Patrize 12 in die Horizontale selbsttätige gelöst wird.

Fig. 3 zeigt in vergrösserter Darstellung als ein Detail aus Fig. 2 den Extruder 15 (Materialgeber) und die Form 14, letztere zur Durchführung des erfindungsgemässen Verfahrens ausgebildet. Gezeigt ist ein Rohling 45, der durch den Materialgeber 15 gebildet wurde. Im Profil ist der Rohling 45 etwa linsenförmig. Diese Form wurde durch Steuerung des Schliesskörpers 46 bei einem konstanten Druck des Materialstromes 49 (plastifizierter Kunststoff) in Richtung A erzielt. Beim Schliessen des Schliesskörpers 46 gegen das Rohrende 47 des Rohres 48 wird der Rohling 45 vom Materialstrom 49 abgetrennt, insbesondere abgequetscht. Soll bei bestimmten Kunststoffen eine grossflächige Abkühlung des Rohlings 45 auf dem Hilfsträger 50 vermieden werden, dann ist ein Rohling 45 linsenförmigen Profils bevorzugt, weil seine Auflagefläche relativ klein ist. Der Rohling 45 kann aber auch schlauch- oder rohrförmig ausgebildet sein, beispielsweise wenn die Abkühlung des Rohlings 45 auf dem Hilfsträger 50 keine wesentliche Rolle spielt. Vereinfachend wirkt sich aus, dass in diesem Fall der Ausbildung des Rohlings 45 die für die Erzeugung notwendige Steuerung des Schliesskörpers 46 entfallen kann. Ringförmige Rohlinge 45 (schlauch-, rohr- und linsenförmigen Profils) sind auch zu deren Ablagerung auf dem Hilfsträger 50 den gefederten Formstift 51 mittig umgebend bevorzugt. Der Formstift 51 ist auf dem Hilfsträger 50 mittig angeordnet und im Hilfsträger 50 und in der Hilfsträgerstange 52 gegen axialen Federdruck verschiebbar. Verschoben in den Hilfsträger wird der Formstift 51 während des Formgebungsvorganges durch den Fortsatz 21, der als Teil des Dornes 12 eine Ausgussöffnung eines Tubenkopfes 17 bildet. Das Abgabeende des Materialgebers 15 ist mit einer Ringdüse 53 umgeben, die einen Gasstrom 54 auf den Rohling 45 und / oder auf die Trennstelle zwischen Materialgeber 15 und Rohling 45 richtet. Die Temperatur des Gasstromes 54 ist gemäss der Erfindung einstellbar, um die Temperatur des Rohlings 45 während seiner Entstehung und Ablage auf dem Hilfsträger 50 zu senken, gleich zu halten oder zu erhöhen, je nach Erfordernissen der folgenden Verpressung und Abstimmung der Verarbeitungstemperaturen der Kopf- und Tubenrohrwerkstoffe. Mit einer vorgegebenen Gasmenge pro Zeiteinheit kann der Gasstrom kontinuierlich oder intermettierend fliessend eingestellt sein, in letzterem Falle beispielsweise nur während der Bildungsdauer des Rohlings 45. Der Gasstrom 54, vorzugsweise ein Luftstrom, kann auch zur Erleichterung der Trennung eines Rohlings 45 vom Materialgeber 15 verwendet werden, wenn gewisse Kunststoffe in plastifiziertem Zustand zum Kleben am Schliesskörper 46 oder Rohrende 47 neigen. Bei kontinuierlich fliessendem Gasstrom 54 kann dieser zur Unterstützung der Trennung kurzfristig stossweise bezüglich Druck und / oder Fliessmenge erhöht werden. Bei diskontinuierlichem Strömen kann der Gasstrom am Ende einer Strömungsdauer erhöht werden. Ist eine Einflussnahme auf die Temperatur bzw. den Wärmeinhalt eines Rohlings 45 entbehrlich, so kann ein Gasstrom nur zu Trennzwecken aus der Ringdüse 53 zum Austrag gelangen.

Die Form 14 umfasst einen formgebenden und nicht formgebenden Teil. Der formgebende Teil wird gebildet von einem Teil der Stirnfläche 60 des Hilfsträgers 50, der inneren Kontur 61 der Formbacken 62 (gezeigt sind zwei, tatsächlich vorhanden sind drei Formbacken 62, die die innere Kontur 61 in jeweils 120 Grad Teilung an ihren vorderen Enden angeformt tragen), und dem Schulterformraum 63. An den Schulterformraum 63 schliesst sich ein runder Aufnahmeraum 64 an, in den der Dorn 12 mit Tubenrohr 13 einfährt, wobei während der Formgebung eines Tubenkopfes 17 am Uebergang vom Schulterformraum 63 und Aufnahmeraum 64 die Verschmelzung des Tubenrohres 14 mit dem Tubenkopf 17 stattfindet.

Mit 65 sind sogenannte Freimachungen bezeichnet, die der Erleichterung der Einführung des Dornes 12 mit Tubenrohr 13 in die Form 14 dienen, am eigentlichen Formgebungsvorgang aber keinen Anteil haben. Das untere Ende der Form 14 ist durch einen Einsatz 66 mit einer Ausnehmung 67 gebildet. Der Einsatz 66 dient der Führung des Hilfsträgers 50 mit Hilfsträgerstange 52. Die Ausnehmung 67 ist so ausgebildet, dass sie den Hilfsträger 50 in unterster Einfahrstellung, gezeigt ist der Hilfsträger 50 in oberer Ausfahrstellung, vollständig in sich aufnehmen kann, wobei in Einfahrstellung dann die Stirnfläche 60 den Formboden bildet. Die Formbacken 62 sind radial in Richtung B soweit verstellbar, dass der Hilfsträger 50 in Offenstellung der Formbacken 62 den auseinandergefahrenen Backenformraum 68, der den Ausguss einer Tube mit Aussengewinde formt, durchfahren kann. Die radiale Verstellung des Formbackens 62 dient auch dazu, nach Formgebung des Kopfes 17 mit Ausguss das Aussengewinde des Ausgusses mit dem formgebenden Gewinde der Formbacken 62 ausser Eingriff zu bringen (sogenannte Entfernung), so dass zwischen Arbeitsstation 5 und 6 der Dorn 12 mit Tubenrohr 13 und daran angeformtem Kopf 17 aus der Form 14 ausgefahren und in horizontale Lage verschwenkt werden kann. Die Kopfmaschine 10 zur Durchführung des erfindungsgemässen Verfahrens umfasst einen auf den Hilfsträger einwirkenden Antrieb 70. Der Antrieb 70 ist in Fig. 3 schematisch dargestellt, und er wirkt mit der Hilfsträgerstange 52 so zusammen, dass die Hilfsträgerstange 52 mit Hilfsträger 50 an ihrem vorderen freien Ende die Form 14 entlang ihrer vertikal verlaufenden Längsachse, d.h. konzentrisch durchfährt. Der Antrieb 70 kann mechanischer (Steuernocken mit Steuerscheiben) elektrischer, hydraulischer oder pneumatischer Art sein, wesentlich ist, dass mit einem Antrieb 70 der genannten Art, Verschiebegeschwindigkeiten des Hilfsträgers 50 auf- und abwärts gerichtet variabel einstellbar sind. Im Rahmen der variablen Geschwindigkeitseinstellung bezüglich Ein- und Ausfahrt des Hilfsträgers 50 liegt auch, unterschiedliche Geschwindigkeiten in einer Richtung einstellen zu können. Plastifizierte Kunststoffe sind z.B. nur dann verarbeitbar, wenn ein Rohling 45 vom Extruder 15 direkt auf den Hilfsträger 50 gefördert und der Hilfsträger 50 während des Fördervorganges entsprechend der Austrittsgeschwindigkeit des plastifizierten Kunststoffes aus dem Extruder 15 so lange eingefahren wird, bis der Rohling 45 sein vorbestimmtes Gewicht oder Volumen erreicht hat, um anschliessend vom Extruder 15 abgetrennt und mit einer grösseren oder kleineren Geschwindigkeit als die Abnahmegeschwindigkeit, d.h. Fördergeschwindigkeit vom Extruder 15 in die Form 14 (je nach Art des zu verarbeitenden Kunststoffes) vermittels des Hilfsträger 50 eingefahren zu werden. Weiter ist der Antrieb 70 so auszugestalten, dass der Hilfsträger 50 hinsichtlich seiner Ausfahrtwegstrecke zwischen vollständiger Einfahrt in die Ausnehmung 67 und vollendeter Ausfahrt (Anstoss der Stirnfläche 60 an den Schliesskörper 46) an jeder Wegstreckendistanz dazwischen anhaltbar ausgebildet ist. Das erfindungsgemässe Verfahren wird bezüglich der Temperaturbehandlung des Kunststoffes zwischen Extrusion und Verpressung noch dadurch ergänzt, indem der Rohling 45 zwischen diesen beiden Fertigungsstufen aufgewärmt oder gekühlt wird. Zu diesem Zweck ist der Hilfsträger 50 durch nicht gezeigte Mittel heizbar oder kühlbar ausgebildet.

Das in der vorstehend beschriebenen Vorrichtung in Arbeitsstation 2 ablaufende erfindungsgemäss ausgebildete Verfahren ist folgendes. In Arbeitsstation 2 ist die Form 14 unter den Extruder 15 gefahren. Aus dem Extruder 15 tritt plastifizierter Kunststoff in Form eines ringförmigen Rohlings 45 beispielsweise linsenförmigen Profils aus. Während des Austretens kann der austretende Kunststoff vermittels des Gasstromes 54 weiter aufgewärmt oder abgekühlt werden. Soll kein Einfluss auf die Temperatur des Rohlings genommen werden, kann der Gasstrom 54 mit der Temperatur des austretenden Kunststoffes kontinuierlich fliessen oder abgeschaltet sein. Tendieren Kunststoffe zum Kleben nach Schliessen des Schliesskörpers 46 (d.h. bei der Abtrennung), so kann die Abtrennung durch einen Gasstoss 54 in gezeigter Richtung unterstützt werden. Der Materialgeber 15 fördert plastifizierten Kunststoff auf den Hilfsträger 50. Abhängig von den thermischen Verarbeitungsvoraussetzungen kann nun der Extruder 15 einen Rohling direkt auf den Hilfsträger 50 fördern, um anschliessend in die Form 14 zur Verpressung mit vorbestimmter Geschwindigkeit eingefahren zu werden. Auch ist es nach der Erfindung möglich, den Hilfsträger 50 beispielsweise nur die Hälfte der Wegstrecke zwischen unterster Einfahrtstellung und oberster Ausfahrtstellung durchfahren zu lassen, ihn dort anzuhalten, den Rohling 45 nach Trennung im freien Fall auf ihn abfallen zu lassen, um anschliessend, d.h. nach Auffall den Hilfsträger mit vorbestimmter Geschwindigkeit einfahren zu lassen. Dabei kann die Einfahrgeschwindigkeit grösser, gleich oder kleiner als die Fallgeschwindigkeit zwischen Extruder 15 und Hilfsträger 50 sein. Nach Einfahrt des Hilfsträgers 50, d.h. seiner vollständigen Aufnahme in der Ausnehmung 67 und seine Stirnfläche 60 den Formboden bildend, bewegen sich die Formbacken 62 in Richtung "C", den Backenformraum 68 gegen das Zentrum schliessend. Die beladene Form ist nun zur Bildung des Tubenkopfes vermittels des Dornes 12 bereit. Mit Einstellbarkeit der Absenkgeschwindigkeit und des Absenkweges (zwischen Null, d.h. Hilfsträger 50 bleibt inaktiv in Ausnehmung 67, und oberster Ausfahrtstellung, d.h. der Hilfsträger nimmt einen Rohling 45 anfänglich direkt vom Extruder 15 ab) ist ein Verfahren zur Herstellung von Tubenköpfen geschaffen, das an eine Vielzahl thermischer Verarbeitungsanforderungen plastifizierbarer Kunststoffe anpassbar ist. Unterstützt wird die Anpassbarkeit dadurch, dass durch Einstellung der Temperatur des Gasstromes 54 und/oder Temperatureinstellung des Hilfsträger 50 Einfluss auf den Wärmeinhalt des Rohling 45 vor Einfahrt in die Form 14 und Verpressung ausgeübt werden kann.

## Patentansprüche

1. Verfahren zur Befüllung einer Matrize (14) zur Anformung eines Tubenkopfes (17) aus Kunststoff an ein offenes Ende eines Tubenrohres (48), bei welchem aus einem abwärts gerichteten Materialstrom (4a) plastifizierten Kunststoffes eine Materialportion als Rohling (45) gebildet, auf einem in der Matrize (14) verfahrbaren Hilfsträger (50) liegend in einen Formhohlraum der Matrize (14) eingebracht und anschliessend vermittels eines Dornes (12) mit darauf aufgenommenem Tubenrohr (13) zu einem mit dem Tubenrohr (13) verbundenen Tubenkopf (17) verpresst wird, dadurch gekennzeichnet, dass zur Einhaltung von Temperaturgradienten der Materialportionen die Wegstrecke des Hilfsträgers (50) zwischen einer Einrichtung zur Bildung des Rohlings (15) und einem Formboden des Formhohlraumes und eine Einfahrgeschwindigkeit des Hilfsträgers (50) in den Formhohlraum variabel eingestellt werden.

2. Verfahren nach Anspruch 1, dadurch gekennzeichnet, dass die Materialportion direkt auf den Hilfsträger (50) aufgebracht wird.

3. Verfahren nach Anspruch 2, dadurch gekennzeichnet, dass der Hilfsträger (50) mit einer Geschwindigkeit in die Form eingefahren wird, die der Fördergeschwindigkeit des Materialgebers (15) entspricht.

4. Verfahren nach Anspruch 1, dadurch gekennzeichnet, dass der Rohling (45) auf einen zur Matrize (14) beabstandet stehenden Hilfsträger (50) aufgebracht wird.

5. Verfahren nach Anspruch 4, dadurch gekennzeichnet, dass der Rohling (45) auf den Hilfsträger (50) fallend aufgebracht wird.

6. Verfahren nach einem der Ansprüche 1 bis 5, dadurch gekennzeichnet, dass der Rohling (45) von einer Anfahrgeschwindigkeit aus beschleunigt oder verzögert in die Matrize (14) eingefahren wird.

7. Verfahren nach einem der Ansprüche 1 bis 6, dadurch gekennzeichnet, dass der Rohling (45) im Profil linsenförmig ausgebildet wird.

8. Verfahren nach einem der Ansprüche 1 bis 6, dadurch gekennzeichnet, dass der Rohling (45) rohrförmig ausgebildet wird.

9. Verfahren nach einem der Ansprüche 1 bis 8, dadurch gekennzeichnet, dass der Rohling (45) während Formung vermittels eines Gasstrahles (54) entweder erwärmt, auf gleicher Temperatur wie die Austrittstemperatur des plastifizierten Kunststoffes gehalten oder abgekühlt wird.

10. Verfahren nach einem der Ansprüche 1 bis 9, dadurch gekennzeichnet, dass der Rohling (45) mittels Gasstrahl (54) vom Materialgeber (15) abgestossen werden kann.

11. Verfahren nach einem der Ansprüche 1 bis 10, dadurch gekennzeichnet, dass der Rohling (45) vermittels des Hilfsträgers (50) aufgeheizt oder gekühlt wird.

## Claims

1. A method of filling a mould (14) for moulding a tube head (17) of plastic material, on an open end of a tubular body portion (48) of a tube, wherein from a downwardly flow of plasticised material (4a) a blank (45) is formed, introduced into a mould cavity of a mould (14) and deposited on an auxiliary carrier (50) and then pressed by means of a mandrel with a tube body portion (48) carried thereon to provide a tube head (17) which is connected to the tube body portion (48), characterised in that to maintain temperature gradients of the blanks (45) the travelling distance of the auxiliary carrier (50) between means to form the blanks (45) and the bottom of the mould cavity and the travelling speeds of the auxiliary carrier (50) into the mould cavity are variably adjusted.

2. A method according to claim 1 characterised in that the portion of material is put directly on to the auxiliary carrier (50).

3. A method according to claim 2 characterised in that the auxiliary carrier (50) is moved into the mould at a speed which corresponds to the conveying speed of a material-supplying device (15).

4. A method according to claim 1 characterised in that the blank (45) is put on to an auxiliary carrier (50) which is disposed at a spacing relative to the mould (14).

5. A method according to claim 4 characterised in that the blank (45) is put on to the auxiliary carrier (50) by falling on to same.

6. A method according to one of claims 1 to 5 characterised in that the blank (45) is introduced into the mould (14) at an accelerated or decelerated rate from a starting speed.

7. A method according to one of claims 1 to 6 characterised in that the blank (45) is of a lens-shaped configuration in profile.

8. A method according to one of claims 1 to 6 characterised in that the blank (45) is of a tubular configuration.

9. A method according to one of claims 1 to 8 characterised in that, during the shaping operation, by means of a gas jet (54) the blank is either heated, held at the same temperature as the discharge temperature of the plasticised plastic material or cooled down.

10. A method according to one of claims 1 to 9 characterised in that the blank (45) can be pushed away from the material-supplying device by means of a gas jet.

11. A method according to one of claims 1 to 10 characterised in that the blank (45) is heated or cooled by means of the auxiliary carrier (50).

## Revendications

1. Procédé de remplissage d'une matrice (14) pour le moulage d'une tête de tube (17) en matière synthétique sur une extrémité ouverte d'un cylindre de tube (48), dans lequel à partir d'un flux (4a) de matière synthétique plastifiée dirigé vers le bas est formée une portion de matière pour constituer une ébauche (45) qui, placée sur un support auxiliaire (50) mobile à l'intérieur de la matrice (14), est introduite dans un creux de moulage de la matrice (14) et qui ensuite est comprimée en une tête de tube (17) solidaire du cylindre de tube (13) à l'aide d'un mandrin (12) portant le cylindre de tube (13), caractérisé en ce que pour respecter des gradients de température des portions de matière, la course du support auxiliaire (50) entre un dispositif de production de l'ébauche (15) et un fond de moule du creux de moulage ainsi qu'une vitesse d'introduction du support auxiliaire (50) dans le creux de moulage sont réglées de façon variable.

2. Procédé selon la revendication 1, caractérisé en ce que la portion de matière est disposée directement sur le support auxiliaire (50).

3. Procédé selon la revendication 2, caractérisé en ce que le support auxiliaire (50) est introduit dans le moule à une vitesse correspondant à la vitesse de transport du distributeur de matière (15).

4. Procédé selon la revendication 1, caractérisé en ce que l'ébauche (45) est placée sur un support auxiliaire (50) situé à distance de la matrice (14).

5. Procédé selon la revendication 4, caractérisé en ce que l'ébauche (45) est placée tombant sur le support auxiliaire (50).

6. Procédé selon l'une des revendication 1 à 5, caractérisé en ce que l'ébauche (45) est introduite dans la matrice (14) de façon accélérée ou temporisée à partir d'une vitesse de départ.

7. Procédé selon l'une des revendications 1 à 6, caractérisé en ce que l'ébauche (45) présente un profil en forme de lentille.

8. Procédé selon l'une des revendications 1 à 6, caractérisé en ce que l'ébauche (45) présente une forme cylindrique.

9. Procédé selon l'une des revendications 1 à 8, caractérisé en ce que l'ébauche (45) pendant le moulage est soit échauffée à l'aide d'un jet de gaz (54), soit maintenue à la même température que la température de sortie de la matière synthétique plastifiée, soit refroidie.

10. Procédé selon l'une des revendications 1 à 9, caractérisé en ce que l'ébauche (45) peut être éjectée du distributeur de matière (15) à l'aide d'un jet de gaz (54).

11. Procédé selon l'une des revendications 1 à 10, caractérisé en ce que l'ébauche (45) est échauffée ou refroidie à l'aide du support auxiliaire (50).
